(19) Europäisches Patentamt
European Patent Office
Office européen des brevets

(11) Numéro de publication : **0 430 826 B1**

(12) # FASCICULE DE BREVET EUROPEEN

(45) Date de publication du fascicule du brevet : **13.04.94 Bulletin 94/15**

(51) Int. Cl.$^5$ : **C07F 7/18,** C08G 77/38, C08G 77/26

(21) Numéro de dépôt : **90420500.2**

(22) Date de dépôt : **20.11.90**

(54) **Silane et organopolysiloxane à reste cyclopentenyle pouvant être obtenu par réaction de Michael.**

(30) Priorité : **21.11.89 FR 8915527**

(43) Date de publication de la demande : **05.06.91 Bulletin 91/23**

(45) Mention de la délivrance du brevet : **13.04.94 Bulletin 94/15**

(84) Etats contractants désignés : **AT BE CH DE DK ES FR GB GR IT LI LU NL SE**

(56) Documents cités :
**EP-A- 0 170 011**
**EP-A- 0 230 342**
**US-A- 4 100 172**
**US-A- 4 526 954**
**US-A- 4 603 086**

(73) Titulaire : **RHONE-POULENC CHIMIE**
**25, quai Paul Doumer**
**F-92408 Courbevoie Cédex (FR)**

(72) Inventeur : **Frances, Jean-Marc**
**9, Avenue Condorcet**
**F-69100 Villeurbanne (FR)**
Inventeur : **Leising, Frédéric**
**11, Allée des Fauvettes, La Condamine**
**F-69440 Mornant (FR)**

(74) Mandataire : **Trolliet, Maurice et al**
**RHONE-POULENC CHIMIE Direction de la Propriété Industrielle Centre de Recherches des Carrières B.P. 62**
**F-69192 Saint-Fons Cédex (FR)**

**EP 0 430 826 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un silane et un organopolysiloxane à reste cyclopentenyle ainsi que les compositions comportant comme polymère de base un diorganopolysiloxane de ce type, capable de réticuler en un élastomère, en particulier par exposition à l'humidité et/ou à l'oxygène de l'air et/ou à un rayonnement U.V.

Des compositions silicones capables de réticuler en un élastomère par réaction de polycondensation par exposition à l'humidité de l'air sont bien connues de l'homme de métier et sont décrites dans de nombreux documents brevets.

Des compositions silicones réticulables en couche mince sous un rayonnement U.V. sont aussi bien connues et comportent des polymères de base diorganopolysiloxane porteurs généralement de fonctions époxy, (méth)acrylate et mercapto.

Plus récemment ont été décrites des compositions silicones réticulables à l'oxygène gazeux, en particulier à l'oxygène de l'air. Les polymères de base sont soit des huiles silicones à fonction mercapto (voir par exemple les brevets américains US-A-4 252 392 et US-A-4 268 655), ou à fonction 1,4-pentadienylène (brevet américain US-A-4 526 954).

Le but principal de la présente invention est de proposer une composition silicone qui soit stable au stockage en l'absence d'humidité, d'oxygène et d'U.V. et qui soit réticulable en un élastomère par au moins un moyen de réticulation choisi parmi :

- l'exposition de la composition silicone à l'humidité atmosphérique,
- l'exposition de la composition silicone à l'oxygène gazeux, en particulier l'oxygène de l'air,
- l'exposition de la composition silicone aux U.V.

Pour atteindre ce but, la présente invention vise tout d'abord les silanes de formule :

$$(X)_a \overset{\displaystyle Y \atop |}{Si} (R^1)_b \qquad (1)$$

dans laquelle :

- $R^1$ est choisi parmi un groupe hydrocarboné monovalent, éventuellement substitué par des atomes d'halogènes ou des groupes cyano,
- X est un groupe hydrolysable et
- Y est un reste cyclopentenyle de formule :

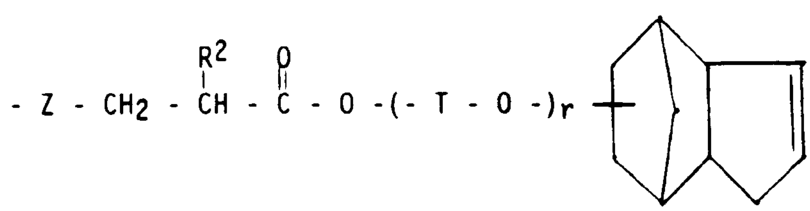

(2)

dans laquelle :

- Z est un radical hydrocarboné saturé divalent linéaire ou ramifié ayant de 1 à 6 atomes de carbone pouvant être interrompu par au moins un hétéroatome choisi parmi S, N et O,
- T est un radical hydrocarboné saturé divalent linéaire ou ramifié en $C_2$-$C_{20}$,
- $R^2$ est choisi parmi un atome d'hydrogène et le radical méthyle,
- a est choisi parmi 0, 1, 2 et 3, de préférence a est 2 ou 3,
- b est choisi parmi 0, 1 et 2,
- a + b = 3,
- r est 0 ou 1.

Les radicaux hydrocarbonés $R^1$ ayant de 1 à 10 atomes de C, substitués ou non par des atomes d'halogènes ou des groupes cyano englobent :

- les radicaux alkyles et halogénoalkyles ayant de 1 à 10 atomes de carbone tels que les radicaux méthyle, éthyle, propyle, isopropyle, butyle, pentyle, hexyle, éthyl-2 hexyle, octyle, décyle, trifluoro-3,3,3 propyle, trifluoro-4,4,4 butyle, pentafluoro-4,4,4,3,3 butyle,

- les radicaux cycloalkyles et halogénocycloalkyles ayant de 1 à 10 atomes de carbone tels que les radicaux cyclopentyle, cyclohexyle, méthylcyclohexyle, propylcyclohexyle, difluoro-2,3 cyclobutyle, difluoro-3,4 méthyl-5 cycloheptyle,
- les radicaux alcényles ayant de 2 à 4 atomes de carbone tels que les radicaux vinyle, allyle, butène-2 yle,
- les radicaux aryles et halogénoaryles mononucléaires ayant de 6 à 10 atomes de carbone tels que les radicaux phényle, tolyle, xylyle, chlorophényle, dichlorophényle, trichlorophényle,
- les radicaux cyanoalkyles dont les chaînons alcoyles ont de 2 à 3 atomes de carbone tels que les radicaux β-cyanoéthyle et γ-cyanopropyle.

Les radicaux méthyle, phényle, vinyle et trifluoro-3,3,3 propyle sont les radicaux préférés.

Les radicaux hydrolysables X, identiques ou différents, sont plus spécifiquement choisis parmi un atome d'halogène (de préférence le chlore) et parmi les radicaux amino-N substitué, amido-N substitué, aminoxy-N,N disubstitué, cétiminoxy, aldiminoxy, alcoxy, alcoxyalkylène-oxy, enoxy, acyloxy.

De préférence les radicaux X répondent aux formules :

$R^3COO$ -, $R^4{}_2C$ = NO -, $R^5$ C = NO -,

$R^3CO$ - $N(R^3)$ -, CO - N -, $R^3NH$ -,
$R^5$

$R^6O$ -, $R^6OR^7O$ -

dans lesquelles :

- les symboles $R^3$, identiques ou différents, représentent des radicaux hydrocarbonés en $C_1$-$C_{15}$,
- les symboles $R^4$, identiques ou différents, représentent des radicaux hydrocarbonés en $C_1$-$C_8$,
- les symboles $R^5$ représentent un radical alkylène en $C_4$-$C_8$,
- le symbole $R^6$ représente un radical alkyle en $C_1$-$C_4$,
- le symbole $R^7$ représente un radical alkylène en $C_2$-$C_4$.

Les symboles $R^3$ représentent des radicaux hydrocarbonés en $C_1$-$C_{15}$ qui englobent :

- les radicaux alkyles en $C_1$-$C_{15}$ tels que les radicaux méthyle, éthyle, propyle, éthyl-2 hexyle, octyle, décyle, dodécyle, pentadécyle,
- les radicaux cycloalkyles en $C_5$-$C_{10}$ tels que les radicaux cyclopentyle, cyclohexyle, méthylcyclohexyle, diméthylcyclohexyle, propylcyclohexyle, cycloheptyle,
- les radicaux aryles mononucléaires en $C_6$-$C_{10}$ tels que les radicaux phényle, tolyle, xylyle,
- les radicaux alcényles en $C_2$-$C_{15}$ tels que les radicaux octényle, undécenyle, tétradécenyle.

Les symboles $R^4$ représentent des radicaux hydrocarbonés en $C_1$-$C_8$ qui englobent notamment :

- les radicaux alkyles en $C_1$-$C_8$ tels que les radicaux méthyle, éthyle, propyle, isopropyle, butyle, isobutyle, éthyl-2 hexyle, octyle,
- les radicaux cycloalkyles en $C_5$-$C_8$ tels que les radicaux cyclopentyle, cyclohexyle, méthylcyclohexyle,
- les radicaux aryles mononucléaires en $C_6$-$C_8$ tels que les radicaux phényle, tolyle, xylyle.

Le symbole $R^6$ représente un radical alkyle en $C_1C_4$ tel que le radical méthyle, éthyle, propyle, butyle.

Le symbole $R^5$ représente un radical alkylène en $C_4$-$C_8$ qui peut répondre aux formules :
$-(CH_2)_4-$, $-(CH_2)_5-$, $-(CH_2)_6-$, $-(CH_2)_7-$, $-CH_2-CH(C_2H_5)(CH_2)_3-$, $-CH_2-CH_2-CH(CH_3)CH_2CH_2-$.

Le symbole $R^7$ représente un radical alkylène en $C_2$-$C_4$ qui peut répondre aux formules :
$-(CH_2)_2-$, $-CH(CH_3)-CH_2$, $-CH(CH_3)CH_2CH_2-$, $-CH(CH_3)-CH(CH_3)-$.

Les radicaux X préférés sont les radicaux alcoxy $R^6O$ et alcoxyalkylenoxy $R^6OR^7O$.

Les silanes de formule (1) peuvent être préparés en particulier par réaction de MICHAEL entre un silane aminé de formule :

$$\begin{array}{l} \quad\;\; W - NH_2 \\ \quad\quad\; | \\ (X)_a\ Si\ (R^1)_b \end{array} \qquad (3)$$

dans laquelle : X, $R^1$, a et b ont la signification donnée ci-dessus à la formule (1) et - W - NH - symbolise le radical Z dont la définition est donnée à la formule (2) sur le (méth)acrylate de dicyclopentadienyle de formule :

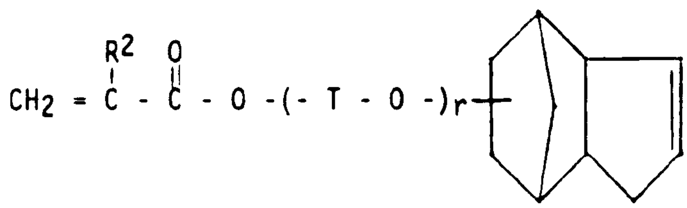

(4)

dans laquelle $R^2$, T et r ont la signification donnée à la formule (2).

Comme exemples concrets d'organoaminosilanes de formule (3) peuvent être cités ceux de formules ci-après, dans lesquelles le groupe organique substitué par au moins un radical amino est un groupe hydrocarboné :

$H_2N(CH_2)_3Si(OCH_2CH_2OCH_3)_3$

$H_2N(CH_2)_3Si(OCH_3)_3$

$H_2N(CH_2)_3Si(OC_2H_5)_3$

$H_2N(CH_2)_4Si(OCH_3)_3$

$H_2NCH_2CH(CH_3)CH_2CH_2SiCH_3(OCH_3)_2$

$H_2NCH_2Si(OCH_3)_3$

$H_2N(CH_2)_2NH(CH_2)_3Si(OCH_3)_3$

$H_2N(CH_2)_2NH(CH_2)_3Si(OCH_2CH_2OCH_3)_3$

$$\begin{array}{l} H_2N(CH_2)_2NH(CH_2)_3Si(OCH_3)_2 \\ \quad\quad\quad\quad\quad\quad\quad\quad\; | \\ \quad\quad\quad\quad\quad\quad\quad\; OCH(CH_3)CH_2OCH_3 \end{array}$$

$H_2N(CH_2)_3Si(OCH_2CH_2OCH_2CH_3)_3$

$$\begin{array}{l} H_2N(CH_2)_2NH(CH_2)_3SiCH = CH_2 \\ \quad\quad\quad\quad\quad\quad\quad\quad\; | \\ \quad\quad\quad\quad\quad\quad\quad\; (OCH_3)_2 \end{array}$$

$$\begin{array}{l} \quad\quad\quad\quad\quad\quad\; CH_3 \\ \quad\quad\quad\quad\quad\quad\;\; | \\ H_2N\text{-}(CH_2)_3\ -\ Si(OCH_3)_2 \end{array}$$

$$\begin{array}{l} H_2N\text{-}(CH_2)\text{-}_2\ NH\ \text{-}(CH_2)_3\ -\ Si(OCH_3)_2 \\ \quad\quad\quad\quad\quad\quad\quad\quad\quad\quad\quad\;\; | \\ \quad\quad\quad\quad\quad\quad\quad\quad\quad\quad\quad\; CH_3 \end{array}$$

La préparation de ces silanes figure plus spécialement dans des brevets américains US-A2 754 311, US-A-2 832 754, US-A-2 930 809, US-A-2 971 864.

Comme exemples concrets d'organoaminosilanes peuvent être cités ceux de formules ci-après, dans lesquelles le groupe organique substitué par au moins un radical amino est un groupe hydrocarboné portant des liaisons éther ou thioéther :

$H_2N(CH_2)_3O(CH_2)_3Si(OCH_2CH_2OCH_3)_3$

$H_2N(CH_2)_3O(CH_2)_3Si(OCH_3)_3$
$H_2N\text{-}CH_2\text{-}CH(CH_3)CH_2O(CH_2)_3SiC_6H_5(OCH_3)_2$
$H_2N\text{-}CH_2CH_2NH(CH_2)_3O(CH_2)_3Si(OCH_3)_3$
$H_2N(CH_2)_2S(CH_2)_3Si(OCH_2CH_2OCH_3)_3$
$H_2N(CH_2)_2S(CH_2)_3Si(OCH_3)_3$

La préparation de ces silanes figure, en particulier, dans les brevets américains US-A-3 341 563, US-A-3 551 375, US-A-3 598 853, US-A-3 488 373.

Les meth(acrylate) de dicyclopentadienyle de formule (4) dans laquelle r = 0 sont décrits en particulier dans les brevets américains US-A-2 414 089, US-A-2 464 400 et US-A-3 772 062, et ceux dans laquelle r = 1 sont décrits en particulier dans le brevet français FR-A-2 399 994.

La réaction de MICHAEL peut être mise en oeuvre en particulier selon l'enseignement du brevet américain US-A-3 033 815.

Deux silanes typiques répondant à la formule (1), sont ceux de formules :

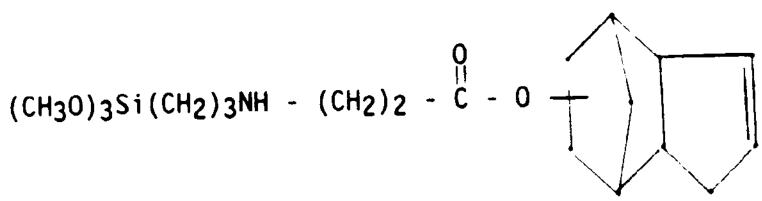

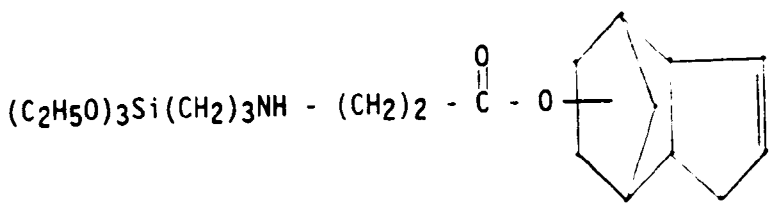

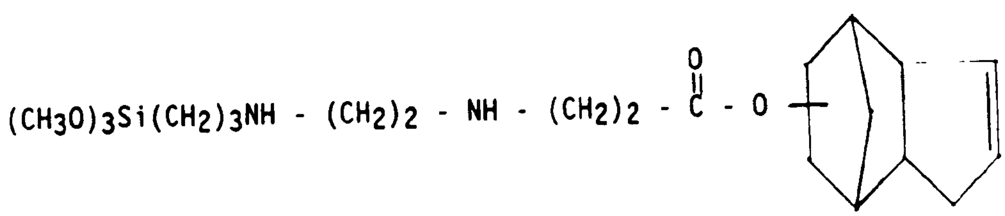

La présente invention vise également un polyorganosiloxane présentant par molécule au moins un motif répondant à la formule générale :

$$(X)_c\,\underset{(R^1)_d}{\overset{Y}{Si}}\,(O)_{\frac{3-(c+d)}{2}} \qquad (5)$$

- $R^1$, X et Y ont la même signification que celle donnée ci-dessus à la formule (1),
- c est 0, 1 ou 2,
- d est 0, 1 ou 2,
- c + d est au plus égal à 2.

Le polyorganosiloxane peut présenter en outre éventuellement d'autres motifs siloxyle répondant à la formule :

$$(R^1)_e\,Si\,(O)_{\frac{4-e}{2}} \quad (6)$$

dans laquelle :

- $R^1$ a la même signification qu'à la formule (1),
- e est choisi parmi 0, 1, 2 et 3.

De préférence $R^1$ est choisi parmi les radicaux méthyle, phényle et vinyle, au moins 80 % en nombre des radicaux $R^1$ étant méthyle.

Les polyorganosiloxanes selon l'invention peuvent donc présenter une structure linéaire, cyclique ou ramifiée.

La présente invention vise plus spécifiquement les copolymères diorganopolysiloxanes statistiques séquencés ou à blocs, de formule moyenne :

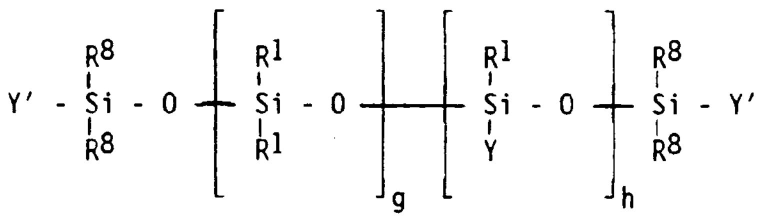

(7)

dans laquelle :

- $R^1$, X et Y ont la signification donnée ci-dessus,
- Y' est choisi parmi les radicaux Y, $R^1$ et hydroxyle,
- $R^8$ est choisi parmi un radical $R^1$ et un radical X,
- g est un nombre entier compris entre 0 et 1 000,
- h est un nombre entier compris entre 0 et 50,
- si h = 0, les deux radicaux Y' représentent alors Y.

et ceux de formule :

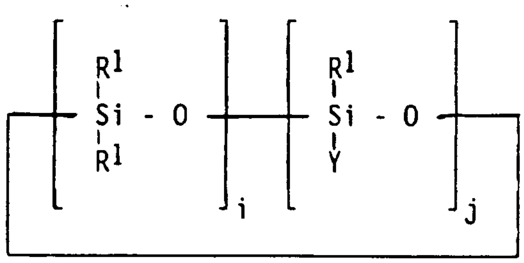

(8)

dans laquelle :

- $R^1$ et Y ont la signification donnée ci-dessus,
- i est un nombre entier compris entre 0 et 9 inclus,
- j est un nombre entier compris entre 1 et 9 inclus,
- i + j est compris entre 3 et 10 inclus.

Les organopolysiloxanes de formules (5), (7) et (8) peuvent être préparés suivant des procédés différents.

Un premier procédé consiste à hydrolyser et polycondenser les silanes de formule (1) dans lesquels X est un atome d'halogène de préférence le chlore, en présence éventuellement d'un halogénosilane, de préférence un chlorosilane de formule :

$$(R^1)_k\,(Cl)_l\,Si \quad (9)$$

avec :

- k = 0, 1, 2 ou 3,
- l = 1, 2, 3 ou 4,
- k + l = 4,
- $R^1$ a la même définition que celle donnée à la formule (1).

L'utilisation de chlorosilane de formule (9) permet d'incorporer dans l'organopolysiloxane de formule (5), des motifs de formule (6). La polycondensation peut être arrêtée par simple neutralisation du milieu réactionnel.

Dans le cas où l'on veut obtenir des polymères linéaires de formule (7) et/ou cycliques de formule (8), on hydrolyse et polycondense par exemple le dichlorosilane $R^1YCl_2Si$ avec éventuellement le dichlorosilane de formule $R^1_2$ Si $Cl_2$.

Dans le cas où l'on arrête la polycondensation par simple neutralisation on obtient un mélange réactionnel comportant des polymères de formule (7) bloqués à chacune de leurs extrémités par un groupe hydroxyle ou par le motif :

$R^1_2YSiO_{0,5}$ si l'on utilise au départ en outre le silane $R^1_2YSiCl$.

On peut également arrêter la polycondensation en ajoutant, en fin de réaction, un composé organosilicié susceptible de réagir avec les hydroxyles terminaux du polymère de formule (7) formé, ce composé organosilicié pouvant répondre aux formules :

$R^1_3SiCl$ , $R^1_3SiNHSiR^1_3$ et $R^1_3SiOSiR^1_3$

La durée de l'hydrolyse peut être comprise entre quelques secondes et plusieurs heures.

Après hydrolyse, la phase aqueuse est séparée de la phase siloxane par tout moyen physique approprié, généralement par décantation et extraction par un solvant organique comme l'éther isopropylique.

La phase siloxane peut être ultérieurement lavée à l'eau, puis distillée éventuellement pour séparer les polymères linéaires de formule (7) des polymères cycliques de formule (8).

Les polymères de formule (7) peuvent être également préparés par un procédé d'équilibration entre un polydiorganopolysiloxane de formule (7) où h est égal à 0 et Y' est OH, ou $R^1$ et $R^8$ est $R^1$ avec un silane de formule (1), ou un silane de formule (3) suivi dans ce dernier cas d'une réaction de MICHAEL avec le meth(acrylate) de dicyclopentadienyle.

Avant d'effectuer cette réaction de MICHAEL on part donc d'un diorganopolysiloxane sensiblement linéaire présentant dans la chaîne des motifs de formule :

$R^1(W\ NH_2)Si\ O$

qui sont par exemple décrits dans les brevets anglais GB-A-1 306 680 et américain US-A-4 412 035.

La présente invention vise également plus spécifiquement une sous famille des polymères de formule (7) répondant à la formule :

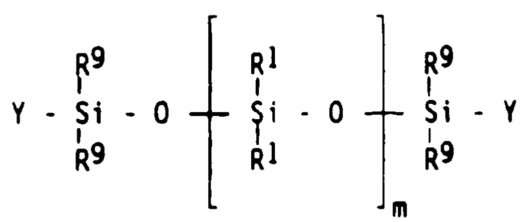

(10)

dans laquelle :

- Y et $R^1$ ont la signification donnée à la formule (1),
- $R^9$, identiques ou différents, sont choisis parmi les radicaux $R^6O$ et $R^6OR^7O$ ayant la même définition que celle donnée à la formule (1),
- m est un nombre entier compris entre 0 et 2 000.

Tous les radicaux $R^1$ sont de préférence des radicaux méthyle.

Les polymères de formule (10) sont préparés par réaction de condensation de silanes de formule :

$(X)_3SiY$ (11)

où X est choisi parmi les radicaux $R^6O$- et $R^6OR^7$, Y a la signification donnée à la formule (1) sur un di(hydroxy)diorganopolysiloxane de formule :

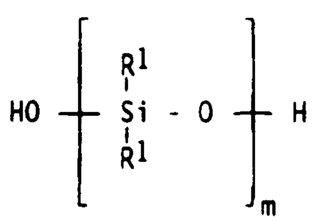

(12)

dans laquelle $R^1$ et m ont la signification donnée à la formule (10).

Cette réaction de polycondensation est mise en oeuvre en présence d'une quantité catalytiquement efficace d'un catalyseur de condensation.

Comme catalyseurs utilisables, on peut en particulier citer :
- l'acétate de potassium : US-A-3 504 051,
- les oxydes minéraux divers : FR-A-1 495 011,
- les dérivés organiques du titane : US-A-4 111 890,
- le titanate plus amine : US-A-3 647 846,
- le chelate d'alcoxy aluminium : GB-A-2 144 758,
- l'hydroxylamine N-N' disubstituée : FR-A-2 508 467,
- l'acide carboxylique plus amine : FR-A-2 604 713,
- les carbamates : EP-A-0 210 402,
- les composés organiques ayant une fonction oxime : FR-A-2 597 875.

On recommande dans le cadre de la présente invention d'utiliser comme catalyseur la lithine de formule LiOH ou LiOH,$H_2O$, utilisée de préférence en solution dans un alcool, selon l'enseignement de la demande de brevet français 88/15 312, diéposée le 4 novembre 1988 au nom de la Demanderesse.

Selon ce procédé de fonctionnalisation, pour une mole de groupement silanol (= SiOH) du polydiorganosiloxane de formule (12) comprenant un groupement hydroxy lié à un atome de silicium à chaque extrémité de chaîne, on utilise généralement de 1 à 60 moles de polyalcoxysilane de formule (11), l'excès de cet alcoxysilane (3) étant d'autant plus important que le poids moléculaire du polydiorganopolysiloxane de formule (12) est plus grand.

Par quantité catalytiquement efficace de lithine on entend une quantité telle que la vitesse de réaction est notablement améliorée et que la température de la réaction est la plus proche possible de la température ambiante.

Généralement on utilise du 0,001 à 0,5 de lithine par rapport à 1 mole de groupement silanol = SiOH du polydiorganosiloxane de formule (12), étant entendu que pour avoir 1 mole de = SiOH il faut 0,5 mole du polydiorganosiloxane de formule (2).

Le procédé est mis en oeuvre à l'abri de l'humidité, par exemple dans un réacteur fermé muni d'une agitation dans lequel on a fait le vide, puis remplace l'air chassé par un gaz anhydre, par exemple par de l'azote.

On charge les réactifs et le catalyseur dans le réacteur et lorsque la réaction de fonctionnalisation est terminée on procède à la neutralisation du catalyseur et éventuellement à la dévolatilisation de la masse réactionnelle obtenue pour en éliminer l'alcool formé au cours de la réaction de fonctionnalisation et l'excès de l'agent de fonctionnalisation {c'est-à-dire le silane de formule (11)}.

Pour neutraliser le catalyseur de fonctionnalisation (la lithine) de nombreux produits peuvent être utilisés, par exemple du trichloroéthylphosphate ou du diméthylvinylsilylacétate. On préfère cependant utiliser un silylphosphate, tel que par exemple ceux décrits dans le brevet français FR-A-2 410 004.

La dévolatisation est effectuée par exemple sous une pression absolue comprise entre 0,133 et 13,3 KPa.

Les polymères de formule (10) sont plus particulièrement intéressants car ils peuvent réticuler en un élastomère par exposition à l'humidité de l'air, par exposition à l'oxygène de l'air, par un rayonnement U.V. ou par une combinaison de ces trois moyens.

Les silanes de formule (1) ont de multiples utilisations.

Ils sont utilisables pour préparer les organopolysiloxanes de formules (5), (7), (8) et (10) ci-dessus.

Ils sont également utilisables comme agents de couplage et comme agents d'enzymage.

Ils peuvent être utilisés comme agents de réticulation dans les compositions organopolysiloxanes réticulables à froid en élastomère et comme agents d'adhérence.

Ils sont plus particulièrement utilisables comme agents accélérateurs de réticulation à l'oxygène et à l'humidité de l'air des latex acryliques conventionnels utilisés comme peintures et revêtements, suivant une teneur de 0,1 à 10 % en poids de silanes de formule (1) par rapport au poids de monomères, monomères acrylates présents dans le latex.

Les polymères ramifiés de formule (5) sont utilisables pour former des revêtements durs après réticulation à l'eau et/ou à l'oxygène de l'air en présence éventuellement d'un catalyseur de condensation qui est un sel ou un complexe d'un métal.

Les polymères linéaires de formules (7) et (10) sont plus particulièrement utilisables comme polymères diorganopolysiloxanes de base, au sein d'une composition silicone, réticulable en un élastomère par au moins un moyen de réticulation choisi parmi :
- l'exposition de la composition silicone à l'humidité atmosphérique,
- l'exposition de la composition à l'oxygène gazeux en particulier à l'oxygène de l'air,
- l'exposition de la composition aux U.V.

Ces compositions silicones peuvent être conditionnées en un seul emballage et sont stables au stockage en l'absence d'humidité, d'oxygène et d'U.V.

La présente invention concerne donc une composition organopolysiloxane, stable au stockage en l'absence d'humidité, d'oxygène et d'U.V. et pouvant réticuler en un élastomère par exposition à au moins un moyen de réticulation choisi parmi l'humidité, l'oxygène et un rayonnement U.V., caractérisée en ce qu'elle comporte :

(A) - 100 parties en poids d'au moins un polymère choisi parmi un des polymères de formule (7) et de formule (10) ci-dessus,

(B) - 0 à 250 parties en poids d'une charge minérale,

(C)- 0 à 5 parties d'un catalyseur de durcissement.

Les charges minérales (B) sont utilisées à raison de 0 à 250 parties, de préférence 20 à 200 parties, pour 100 parties des polymères $\alpha,\omega$-di(hydroxy)diorganopolysiloxanes (A).

Ces charges peuvent se présenter sous la forme de produits très finement divisés dont le diamètre particulaire moyen est inférieur à 0,1 micromètre. Parmi ces charges figurent les silices de combustion et les silices de précipitation ; leur surface spécifique BET est généralement supérieure à 40 $m^2/g$.

Ces charges peuvent également se présenter sous la forme de produits plus grossièrement divisés, de diamètre particulaire moyen supérieur à 0,1 micromètre. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre ; leur surface spécifique est généralement inférieure à 30 $m^2/g$.

Ces charges (B) peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysiloxanes (brevets français FR-A-1 126 884, FR-A-1 136 885, FR-A-1 236 505 ; brevet anglais GB-A-1 024 234). Les charges traitées renferment, dans la plupart des cas, de 3 à 30 % de leur poids de composés organosiliciques.

Les charges (B) peuvent être constituées d'un mélange de plusieurs types de charges de granulométrie différente ; ainsi par exemple, elles peuvent être constituées de 5 à 95 % de silices finement divisées de surface spécifique BET supérieure à 40 $m^2/g$ et de 95 à 5 % de silices plus grossièrement divisées de surface spécifique inférieure à 30 $m^2/g$ ou de carbonate de calcium traité ou non traité.

Comme catalyseur (C) de condensation, on peut utiliser en particulier les sels d'acide monocarboxylique de métaux tels que le baryum, le bismuth, le cobalt, le calcium, le cérium, le chrome, le cuivre, le fer, le plomb, le magnésium, le manganèse, le nickel, les terres rares, l'étain, le zinc et le zirconium. D'autres ligands organiques peuvent être liés aux métaux tels que les ligands chelates (acétylacétonate) et carbonyle. Les catalyseurs recommandés sont les sels d'acides monocarboxyliques de cobalt, d'étain, de fer, de plomb et de bismuth et plus particulièrement l'éthyl-2 hexanoate de cobalt. Quand on utilise un catalyseur des quantités de 0,01 à 5 parties, de préférence de 0,25 à 3 parties en poids de sel métallique pour 100 parties de polymère A, conviennent généralement bien.

Les compositions selon l'invention peuvent contenir en outre pour 100 parties de polymère (A) de 0,05 à 5 parties d'un photosensibilisateur.

Comme photosensibilisateur on recommande d'utiliser un mélange de préférence 50/50 en poids de benzophénone et d'hydroxy-1 cyclohexyle phénylcétone dans le cas d'une composition exempte de charges ou encore la cétone de MICHAEL de formule

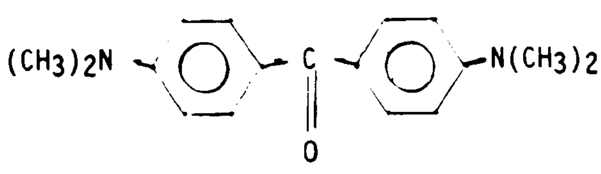

en mélange de préférence 50/50 avec de la benzophénone en présence de charges.

Cependant d'autres photosensibilisateurs sont utilisables et comprennent, par exemple, l'hydroxy-2 méthyl-2 phényl-1 propanone, la cyclohexanone, l'acétophénone, la propiophénone, la benzophénone, la xanthone, la fluorénone, le benzaldéhyde, le fluorène, l'anthraquinone, la triphénylamine, le carbazole, la 3-méthylacétophénone, la 4-méthylacétophénone, la 3-pentylacétophénone, la 4-méthoxyacétophénone, la 3-bromoacétophénone, la 4-allylacétophénone, le p-diacétylbenzène, la 3-méthoxybenzophénone, la 4-méthylbenzophénone, la 4-chlorobenzophénone, la 4,4'-diméthoxybenzophénone, la 4-chloro-4'-benzylbenzophénone, la 3-chloroxanthone, la 3,9-dichloroxanthone, la 3-chloro-8-nonylxanthone, etc .....

Les compositions selon l'invention peuvent contenir en outre les adjuvants ou additifs usuels, utilisés habituellement dans les compositions élastomères silicones bien connues de l'homme de métier. Parmi ces adjuvants on peut en particulier citer les plastifiants qui peuvent être des huiles silicones ou des plastifiants organiques. Les plastifiants décrits dans le brevet américain US-A-4 525 565 sont en particulier utilisables.

Parmi les autres adjuvants ou additifs on peut en particulier citer les pigments de colorations, les agents d'adhérence, les stabilisants thermiques, les antioxydants, les agents de fluidisation, les agents thixotropants, les antioxydants, les parfums, etc.....

Pour fabriquer les compositions conformes à l'invention, il est nécessaire d'utiliser un appareillage qui permette de mélanger intimement à l'abri de l'humidité de l'oxygène gazeux et des U.V. avec et sans apport de chaleur, les divers constituants fondamentaux auxquels sont éventuellement ajoutés les adjuvants et additifs précités.

Un procédé plus particulièrement recommandé est celui qui consiste à introduire dans un mélangeur, sous chauffage éventuel à une température de 20-150 °C, à l'abri de l'humidité de l'air les ingrédients dans l'ordre suivant : l'huile (A), éventuellement le plastifiant, le catalyseur (C) et, éventuellement le photosensibilisateur (D) et enfin la charge (B).

On effectue ensuite de préférence un dégazage sous une pression réduite comprise par exemple entre 0,01 et 10 KPa.

Les compositions selon l'invention sont stables au stockage pendant au moins 6 mois et même un an, et sont plus particulièrement utilisables pour le jointoiement dans l'industrie du bâtiment, l'assemblage des matériaux les plus divers (métaux, matières plastiques, caoutchoucs naturels et synthétiques, bois, carton, faïence, brique, céramique, verre, pierre, béton, éléments de maçonnerie), l'isolation de conducteurs électriques, l'enrobage de circuits électroniques, la préparation de moules servant à la fabrication d'objets en résines ou mousses synthétiques.

Les compositions selon l'invention peuvent être éventuellement utilisées après dilution dans des composés organiques liquides, les diluants sont de préférence des produits usuels commercialisés choisis parmi :

- les hydrocarbures aliphatiques, cycloaliphatiques, aromatiques, halogénés ou non, tels que le cyclohexane et le toluène,
- les cétones aliphatiques et cycloaliphatiques telle que la méthyléthylcétone,
- les esters tels que l'acétate d'éthyle.

La quantité de diluant demeure en général peu importante, elle est en général inférieure à 50 % en poids par rapport au poids total de la composition.

Les dilutions précitées de ces compositions dans des diluants organiques sont plus spécialement utilisables pour l'imprégnation en couches minces d'articles tissés ou non-tissés, l'enduction de feuilles en métal ou en matière plastique ou cellulosique ; toutefois elles peuvent être projetées, par exemple par pulvérisation à l'aide d'un pistolet à peintures, sur n'importe quels substrats, pour lesquels il est nécessaire d'obtenir un revêtement d'épaisseur de l'ordre de 5 à 300 µm. Après la projection des dilutions, les diluants s'évaporent et les compositions libérées durcissent en un film caoutchouteux parfaitement uniforme.

Par ailleurs, ce film d'élastomère peut servir comme revêtement antiadhérent inerte, non toxique, de divers substrats en contact avec des produits alimentaires tels que (1) des papiers d'emballage pour confiserie, ou viandes congelées, (2) des bacs métalliques utilisables pour la préparation de glaces et sorbets et (3) des filets métalliques dans lesquels on dépose et moule la pâte à pain et que l'on introduit avec leur contenu dans les fours pour la cuisson du pain. Il peut être employé également, comme revêtement antiadhérent et non toxique de matériaux en contact avec le corps humain tels que compresses, pansements spéciaux pour brûlures.

Dans ce qui suit ou ce qui précède, sauf mentions contraires, les parties et pourcentages sont en poids.

Les exemples suivants illustrent l'invention.

- <u>EXEMPLE 1</u> : <u>Préparation d'un agent couplant de formule</u> :

$$(CH_3O)_3Si-(CH_2)_3NH-(CH_2)_2-\underset{\underset{O}{\|}}{C}-O-A$$

avec A = 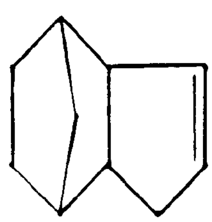

J/

On prépare un agent couplant de formule J/ par réaction de MICHAEL.

Dans un réacteur en verre, de 1 litre de capacité, muni d'un système d'agitation, d'une sonde de température, d'un réfrigérant ascendant, on introduit à 20 °C sous atmosphère inerte 173 g (1 mole) de γ-aminopropyltriméthoxysilane et 204 g (1 mole) d'acrylate de dicyclopentadienyle.

On maintient 10 heures sous agitation à 20 °C. La température monte dans la première heure à 30 °C.

L'analyse par Résonnance Magnétique Nucléaire (RMN)$^1$H et $^{13}$C confirme la structure du produit.

RMN$^1$ H : solvant $CDCl_3$, référence TMS (tétraméthylsilane)

| - $CH_2$ | - NH - | $CH_2$ - | $CH_2$ - | $\underset{\underset{O}{\parallel}}{C}$ | - O - A |
|---|---|---|---|---|---|
| 2,53 ppm | | 2,39 ppm | 2,78 ppm | | |

RMN$^{13}$ C : solvant $CDCl_3$, référence TMS

| - $CH_2$ | - NH - | $CH_2$ - | $CH_2$ - | $\underset{\underset{O}{\parallel}}{C}$ |
|---|---|---|---|---|
| 34,7 | | 44,6 | 51,9 | 172 ppm |

- EXEMPLE 2 : Fonctionnalisation d'une huile α,ω-dihydroxypolydiméthylsiloxane :

Dans un réacteur en verre de 5 litres, muni d'un système d'agitation tripale, on introduit 800 g d'une huile polydiméthylsiloxane α,ω-dihydroxylée de formule moyenne :

$$HO - \left[ \begin{array}{c} Me \\ | \\ Si - O \\ | \\ Me \end{array} \right]_{800} - H$$

Me = méthyle

η = 40 000 mPa.s, soit environ 30 mmoles d'hydroxyle dosé.

On ajoute à cette huile 15,30 g du silane préparé à l'exemple 1 (40 mmoles), puis 0,38 g d'une solution de lithine (LiOH) dans le méthanol à 10 % soit 0,9 mmole.

On maintient pendant 10 minutes sous agitation, à température ambiante puis on introduit 0,68 g d'une solution d'acide phosphorique dans l'eau.

On obtient une huile de formule moyenne :

$$A - \underset{\underset{O}{\parallel}}{OC} - (CH_2)_2 - NH - (-CH_2)_3 - \begin{array}{c} OMe \\ | \\ Si \\ | \\ OMe \end{array} - O - \left[ \begin{array}{c} Me \\ | \\ Si - O \\ | \\ Me \end{array} \right]_{800} - \begin{array}{c} OMe \\ | \\ Si \\ | \\ OMe \end{array} - Y$$

$$Y = -(CH_2)_3 - NH - (CH_2)_2 - \underset{\underset{O}{\parallel}}{C} - O - A$$

K/

A a la signification donnée à l'exemple 1, et de viscosité : 60 000 mPa.s, stockée à l'abri de l'air et de la lumière.

- EXEMPLE 3 :

Dans un mélangeur tripale on homogénéise à l'abri de l'humidité et de l'oxygène de l'air :
- 100 parties du polymère obtenu à l'exemple 2,
- 100 parties de silice de précipitation,
- 1 partie de solution d'octoate de cobalt à 6 %.

La composition monocomposante ainsi obtenue est conservée à l'abri de l'humidité et de l'oxygène de l'air dans des tubes étanches en aluminium ; on étale le contenu d'un tube sous forme d'une couche de 2 mm d'épaisseur, à l'air libre, sur une plaque en polyéthylène.

On mesure le temps (tp) de formation de peau appelé également le temps pour l'obtention d'un toucher non collant et le temps de démoulage (td) nécessaire pour pouvoir retirer l'élastomère de la plaque.

La couche déposée se transforme en un film caoutchouteux ; 24 heures après le dépôt de la couche, on enlève le film d'élastomère et mesure après un vieillissement de 1 jour et de 7 jours à la température ambiante, les propriétés dynamométriques des élastomères, à savoir :
- la dureté SHORE A (DSA) selon la norme NF-T-51 109,
- la résistance à la rupture (R/R) en MPa selon la norme NF-T-46 002,
- l'allongement à la rupture (A/R) en % selon la norme NF-T-46 002,
- le module (M.Y.) en MPa pour un allongement de 100 %.

Les résultats sont les suivants :
- tp = 12 heures,
- td = 72 heures

Après 1 jour :
- DSA = 10

Après 7 jours :
- DSA = 15
- A/R = 86 %
- R/R = 2 MPa

- EXEMPLE 4, 5, 6 ET 7 :

On répète exactement le mode opératoire de l'exemple 3 sauf que l'on modifie la composition et le moyen de réticulation.

Les résultats obtenus sont rassemblés dans le tableau 1 ci-après.

TABLEAU 1

| | EX. 4A | EX. 4B | EX. 4C* | EX. 4C** |
|---|---|---|---|---|
| POLYMERE B (parts) | 100 | 100 | 100 | 100 |
| SILICE AEROSIL (parts) COMBUSTION 150 m2/g | 8 | 0 | 8 | 8 |
| SILICE AEROSIL COMBUSTION 150 m2/g séchée 3 h à 60 °C | 0 | 8 | 0 | 0 |
| OCTOATE DE COBALT (6 % Co parts) | 0,05 | 0,05 | 0,05 | 0,05 |
| BENZOPHENONE (parts) | 0 | 0 | 0,125 | 0,125 |
| CETONE DE "MICHLER" (parts)*** | 0 | 0 | 0,125 | 0,125 |
| COULABILITE mm en 30 mn | 105 | 105 | 105 | 105 |
| TEMPS DE FORMATION DE PEAU (mn) | 25 | 25 | 15 | 30 |
| DEMOULAGE (h) | 72 | 96 | 7 | supérieur à 4 jours |
| DURETE SHORE A 3 jours<br>7 jours | 2<br>3 | 0<br>0 | 5<br>5 | 0<br>2 |
| RESISTANCE RUPTURE MPa | 0,22 | 0,2 | 0,63 | - |
| ALLONGEMENT RUPTURE % | 606 | 420 | 380 | - |
| MODULE DE YOUNG MPa | 0,2 | 0,2 | 0,3 | - |

* Exposition à l'humidité atmosphérique et à la lumière du soleil

** Exposition à l'humidité atmosphérique uniquement

*** CETONE DE "MICHLER" :

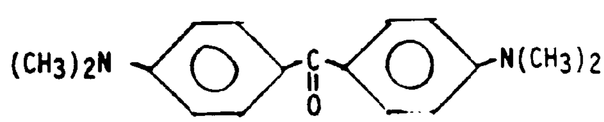

- <u>EXEMPLE 8</u> : <u>Condensation d'une huile polydiméthylsiloxane α,ω-dihydroxylée avec un silane aminé</u> :

Dans un réacteur en verre de 250 ml muni d'un réfrigérant ascendant, d'un système d'agitation et de chauffage d'un système de mesure de la température, d'un récepteur conique plongé dans un bain d'acétone carboglace et relié à un système de mise en dépression de l'appareillage ; on introduit 92,7 g d'une huile polydiméthylsiloxane α,ω-dihydroxylée comportant 200 mmoles d'hydroxyle, puis 16,1 g de méthyldiméthoxy-N-aminoéthyl-aminopropylsilane soit 78 mmoles.

On chauffe à 80 °C sous agitation puis on met le réacteur sous dépression de 0,133 KPa pendant 360

minutes à 80 °C.

On obtient 4,18 g de méthanol, soit 130 mmoles.

L'analyse spectroscopique par RMN $^{29}Si$ $^{1}H$ et $^{13}C$ du produit obtenu dans le réacteur est effectuée.

L'analyse par RMN $^{29}Si$ en milieu $CDCl_3$ par rapport à une référence, le tétraméthylsilane, permet d'enregistrer deux types de signaux :

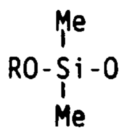 = $D^{OR}$ (-11,3 à -14,7 ppm) 7,5 % molaire

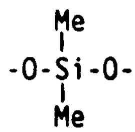 = D et D modifiés (-19,4 à -22,8 ppm) 92,5 %

soit un taux de transformation des motifs $D^{OH}$ de 59 %

On obtient donc une huile de formule moyenne :

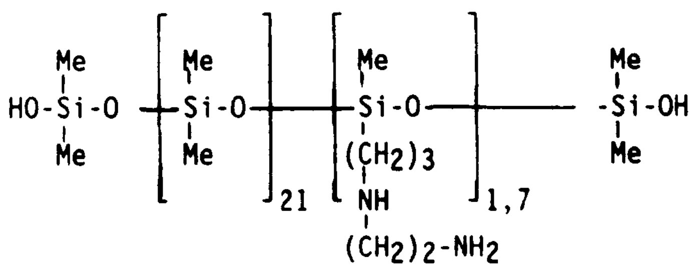

de viscosité 265 mPa.s.

- <u>EXEMPLE 9</u> : <u>Réaction d'addition de MICHAEL avec un acrylate de dicyclooentadiène</u> :

Dans le même réacteur utilisé à l'exemple 8 on introduit 96,9 g du polymère obtenu à l'exemple 8, soit 88 meq $NH_2$ et 18,16 g d'acrylate de dicyclopentadiène, soit 89 mmoles.

On chauffe l'ensemble pendant 1 heure à 140 °C.

On obtient alors une huile de formule moyenne :

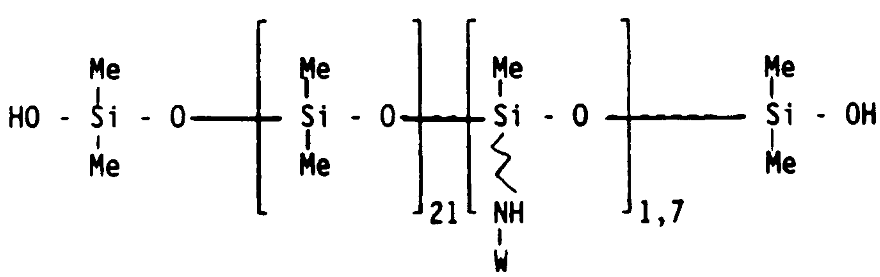

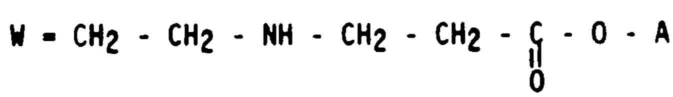

A a la signification donnée à l'exemple 1.

En effet par RMN$^1$H on observe la disparition complète des protons éthyléniques à 5,7 et 6 et 6,3 ppm.

De même par RMN$^{13}$C on observe la disparition des signaux attribués aux carbones acryliques hydrogénés à 129 et 129,7 ppm.

- EXEMPLE 10 : Réticulation à l'oxygène de l'air d'une huile greffée acrylate de dicyclopentadiene :

Deux compositions sont réalisées à partir de l'huile G obtenue à l'exemple 9.

Composition 61 : 200 p d'huile G
200 p de silice de précipitation
20 p d'octoate de cobalt à 6 %.

Composition 62 : 200 p d'huile G
300 p de silice de précipitation
20 p d'octoate de cobalt à 6 %.

Les compositions 61 et 62 sont appliquées sous la forme de films (pellicules) de 2,5 mm d'épaisseur sur une plaque d'acier recouverte d'un papier siliconé.

Après 72 heures exposés à l'oxygène de l'air, les élastomères issus des compositions 61 et 62 sont démoulables.

Les élastomères sont laissés 7 jours à température ambiante.

Les propriétés mécaniques alors obtenues sont les suivantes :

Composition $G_1$ :

- R/R : 0,4 MPa
- A/R : 81 %
- MY : 0,5 MPa

Composition $G_2$ :

- R/R : 0,5 Mpa
- A/R : 83 %
- MY : 0,6 MPa

- EXEMPLE 12 : Réaction de MICHAEL effectuée à 20 °C :

Dans un réacteur de 250 ml muni d'un système d'agitation à pales pouvant être mis sous dépression, on introduit 97,6 g d'huile polydiméthysiloxane α,ω-dihydroxylée comportant 6,3 mmoles d'hydroxyle dosé et 0,649 g de silane aminé utilisé à l'exemple 8.

On chauffe à 80 °C sous une pression réduite de 0,133 KPa pendant 150 minutes ; on obtient une huile de formule moyenne :

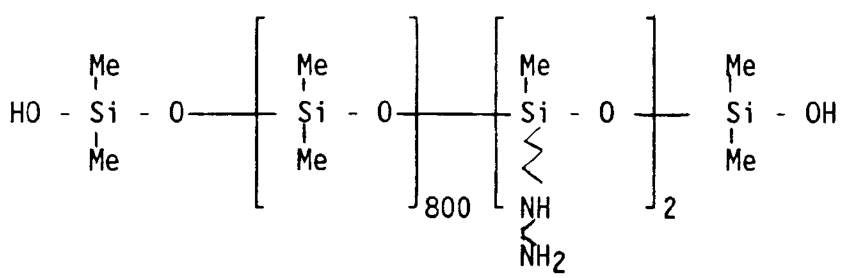

sur laquelle on additionne 0,64 g, soit 3,15 mmoles d'acrylate de dicyclopentadiene. On laisse sous agitation pendant 15 heures à température ambiante et on obtient une huile H de formule moyenne :

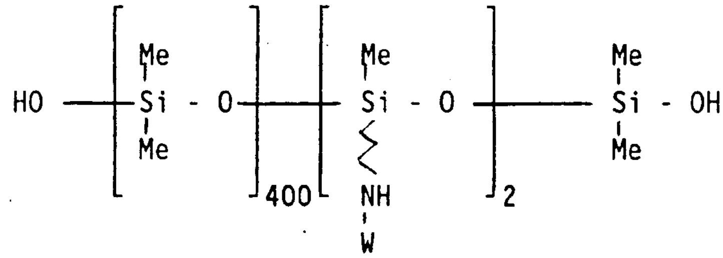 H

W ayant la signification donnée à l'exemple 9.

- EXEMPLE 14 :

On étale sous la forme d'un film de 2,5 mm d'épaisseur deux compositions :

Composition $H_1$ : 200 parts de H
200 parts de silice de précipitation
0,6 part d'octoate de cobalt

Composition $H_2$ : 200 parts de H
300 parts de silice de précipitation
0,6 part d'octoate de cobalt

On observe un temps de formation de peau de 40 minutes pour $H_1$ et $H_2$.

## Revendications

**1.** Silane de formule

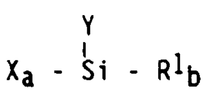 (1)

dans laquelle :

- $R^1$ est choisi parmi un groupe hydrocarboné monovalent, éventuellement substitué par des atomes d'halogènes ou des groupes cyano,
- X est un groupe hydrolysable et
- Y est un reste cyclopentenyle de formule :

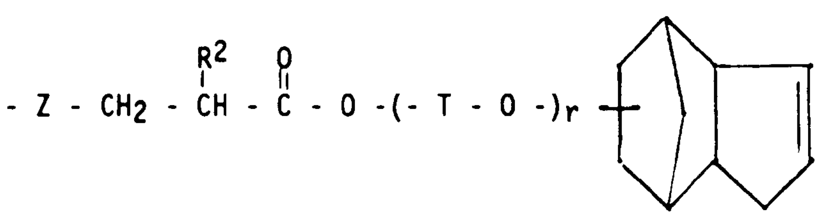 (2)

dans laquelle :

- Z est un radical hydrocarboné saturé divalent linéaire ou ramifié ayant de 1 à 6 atomes de carbone pouvant être interrompu par au moins un hétéroatome choisi parmi S, N et O,
- T est un radical hydrocarboné saturé divalent linéaire ou ramifié en $C_2$-$C_{20}$,
- $R^2$ est choisi parmi un atome d'hydrogène et le radical méthyle,
- a est choisi parmi 0, 1, 2 et 3,
- b est choisi parmi 0, 1 et 2,
- a + b = 3.
- r est 0 ou 1.

**2.** Silane selon la revendication 1, caractérisé en ce que le radical X est choisi parmi un atome d'halogène et parmi les radicaux amino-N substitué, amido-N substitué, aminoxy-N,N disubstitué, cétiminoxy, aldiminoxy, alcoxy, alcoxyalkylène-oxy, enoxy, acyloxy.

**3.** Silane de formules :

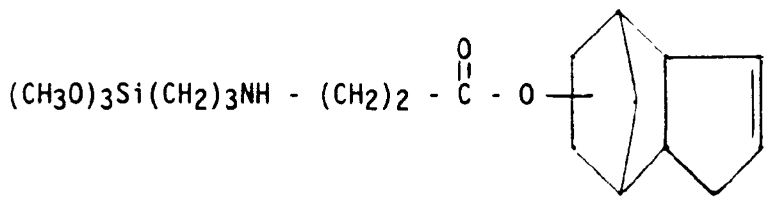

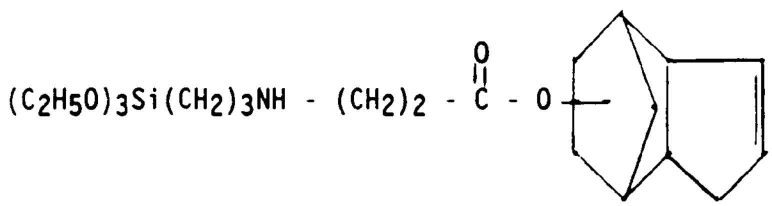

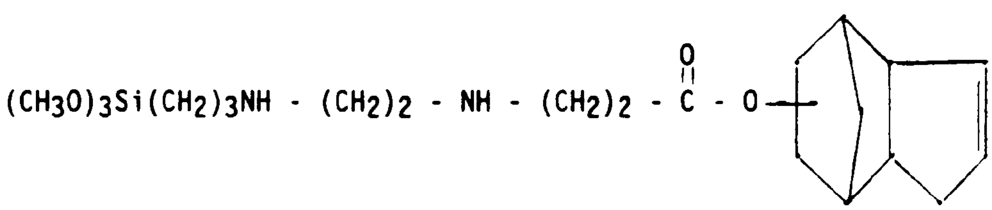

**4.** Polyorganosiloxane présentant par molécule au moins un motif répondant à la formule générale :

$$(X)_c \overset{\displaystyle Y}{\underset{\displaystyle (R^1)_d}{Si}} (O)_{\frac{3-(c+d)}{2}} \qquad (5)$$

- $R^1$, X et Y ont la même signification que celle donnée à la formule (1) de la revendication 1,
- c est 0, 1 ou 2,
- d est 0, 1 ou 2,
- c + d est au plus égal à 2.

**5.** Polyorganosiloxane selon la revendication 4, caractérisé en ce qu'il comporte en outre :

$$(R^1)_e\ Si\ (O)_{\frac{4-e}{2}} \qquad (6)$$

dans laquelle :

- $R^1$ a la même signification qu'à la formule (1) de la revendication 1,
- e est choisi parmi 0, 1, 2 et 3.

**6.** Copolymères diorganopolysiloxanes statistiques séquencés ou à blocs, de formule :

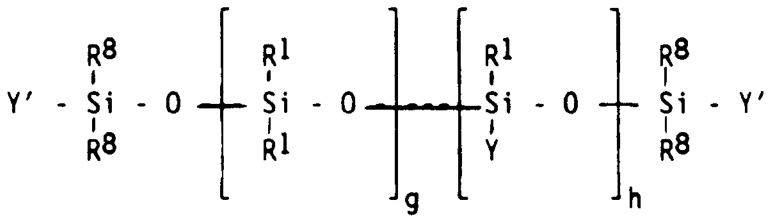 (7)

dans laquelle :

- $R^1$, X et Y ont la signification telle que définie dans la revendication 1,
- Y' est choisi parmi les radicaux Y, $R^1$ et hydroxyle,
- $R^8$ est choisi parmi un radical $R^1$ et un radical X,
- g est un nombre entier compris entre 0 et 1 000,
- h est un nombre entier compris entre 0 et 50,
- si h = 0, les deux radicaux Y' est Y. et ceux de formule :

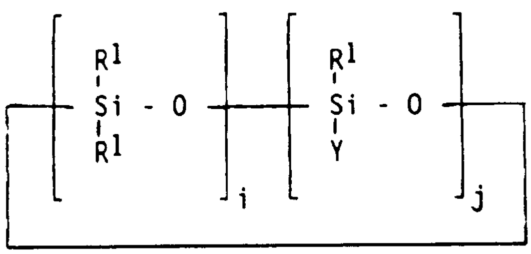 (8)

dans laquelle :

- $R^1$ et Y ont la signification telle que définie dans la revendication 1,
- i est un nombre entier compris entre 0 et 9 inclus,
- j est un nombre entier compris entre 1 et 9 inclus,
- i + j est compris entre 3 et 10 inclus.

**7.** Polydiorganosiloxane selon la revendication 6 répondant à la formule :

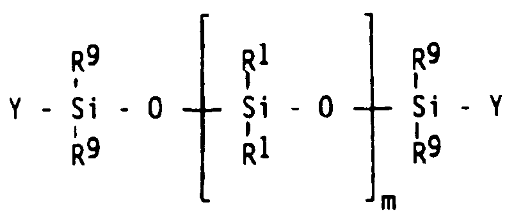 (10)

dans laquelle :

- Y et $R^1$ ont la signification donnée à la formule (1) de la revendication 1,
- $R^9$, identiques ou différents, sont choisis parmi les radicaux $R^6O$ et $R^6OR^7O$,

le symbole $R^6$ représentant un radical alkyle en $C_1$-$C_4$ et le symbole $R^7$ représentant un radical alkylène en $C_2$-$C_4$.

**8.** Composition organopolysiloxane, stable au stockage en l'absence d'humidité, d'oxygène et d'U.V. et pouvant réticuler en un élastomère par exposition à au moins un moyen de réticulation choisi parmi l'humidité, l'oxygène et un rayonnement U.V., caractérisée en ce qu'elle comporte :

(A) - 100 parties en poids d'au moins un polydiorganosiloxane tel que défini à la revendication 6 ou 7,
(B) - 0 à 250 parties en poids d'une charge minérale,
(C) - 0 à 3 parties d'un catalyseur de durcissement.

**9.** Composition selon la revendication 8, caractérisée en ce que le catalyseur de durcissement est à base

de fer, de manganèse ou d'étain.

**10.** Composition selon la revendication 8 ou 9, caractérisée en qu'elle comporte en outre pour 100 parties de polymère (A), de 0,05 à 5 parties d'un photosensibilisateur.

**11.** Composition selon la revendication 10, caractérisée en ce que le photosensibilisateur a pour formule :

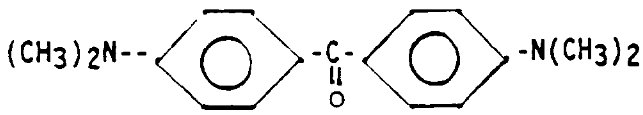

(cétone de MICHLER)

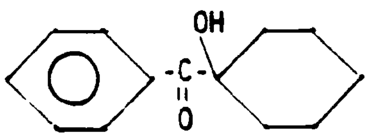

(Hydroxy-1 cyclohexyle phénylcétone)

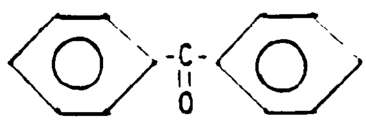

(benzophénone)

## Patentansprüche

**1.** Silan mit der Formel

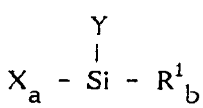

(1)

in der:

- $R^1$ aus einer monovalenten Kohlenwasserstoffgruppe ausgewählt ist, die gegebenenfalls mit Halogenatomen oder Cyangruppen substituiert ist
- X eine hydrolisierbare Gruppe ist und
- Y ein Cyclopentenylrest mit folgender Formel ist:

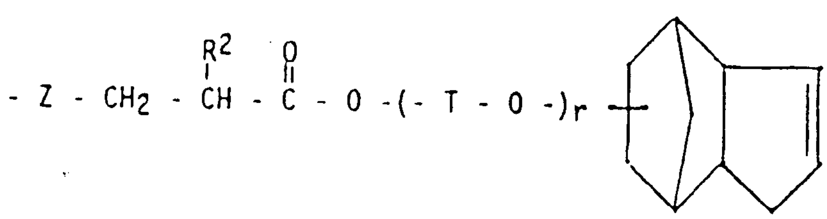

(2)

in der:

- Z ein gesättigter divalenter linearer oder verzweigter Kohlenwasserstoffrest mit 1 bis Kohlenstoffatomen ist, die durch mindestens ein Heteroatom, ausgewählt aus S, N und O, unterbrochen sein können,

- T ein gesättigter divalenter linearer oder verzweigter Kohlenwasserstoffrest mit $C_2$-$C_{20}$ ist,
- $R^2$ aus einem Wasserstoffatom und dem Methylrest ausgewählt ist,
- a aus 0, 1, 2 und 3 ausgewählt ist,
- b aus 0, 1 und 2 ausgewählt ist,
- a + b = 3,
- r gleich 0 oder 1 ist.

2. Silan nach Anspruch 1, dadurch gekennzeichnet, daß der Rest X aus einem Halogenatom und den folgenden Resten ausgewählt ist: amino-N-substituierter, amido-N-substituierter, aminoxy-N,N-disubstituierter, Ketiminoxy-, Aldiminoxy-, Alkoxy-, Alkoxyalkylenoxy-, Enoxy-, Acyloxyrest.

3. Silan mit den Formeln:

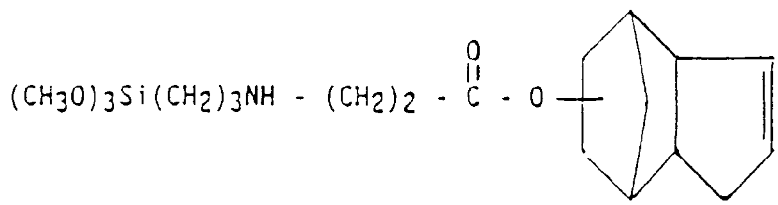

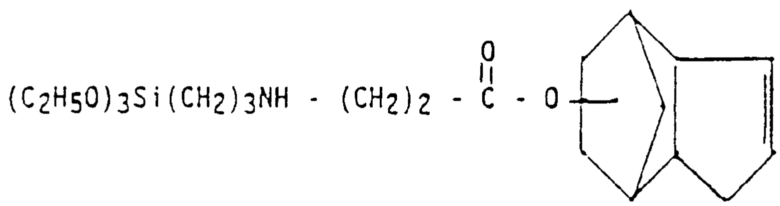

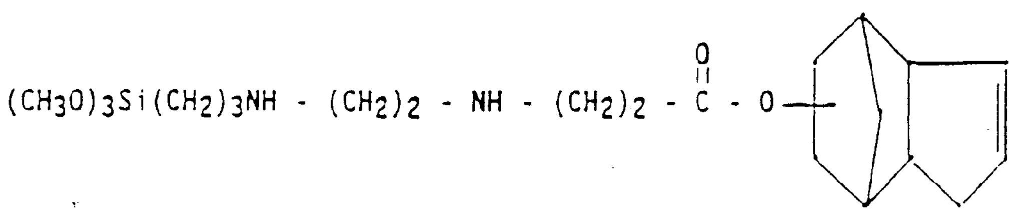

4. Polyorganosiloxan, das pro Molekül mindestens ein Teilstück aufweist, das folgender allgemeiner Formel entspricht:

$$(X)_c \overset{Y}{\underset{(R^1)_d}{Si}} (O)_{\frac{3-(c+d)}{2}} \qquad (5)$$

- $R^1$, X und Y haben die gleiche Bedeutung wie für die Formel (1) des Anspruchs 1 angegeben,
- c ist 0, 1 oder 2,
- d ist 0, 1 oder 2,
- c + d ist höchstens gleich 2.

**5.** Polyorganosiloxan nach Anspruch 4, dadurch gekennzeichnet, daß es außerdem folgendes beeinhaltet:

$$(R^1)_e\ Si\ (O)_{\frac{4-e}{2}} \quad (6)$$

wobei:

- $R^1$ die gleiche Bedeutung wie in der Formel (1) des Anspruchs 1 hat,
- e aus 0, 1, 2 und 3 ausgewählt ist.

**6.** Diorganopolysiloxan-Copolymere, statistische oder Blockcopolymere, mit der Formel:

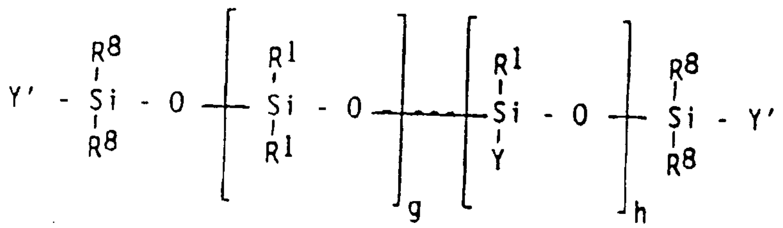

(7)

in der:

- $R^1$, X und Y die gleiche Bedeutung haben wie in Anspruch 1 festgelegt,
- Y' aus den Resten Y, $R^1$ und Hydroxyl ausgewählt ist,
- $R^8$ aus einem Rest $R^1$ und einem Rest X ausgewählt ist,
- g eine ganze Zahl ist, die zwischen 0 und 1 000 liegt,
- h eine ganze Zahl ist, die zwischen 0 und 50 liegt,
- die beiden Reste Y' gleich Y sind, wenn h = 0 und diejenigen mit der Formel:

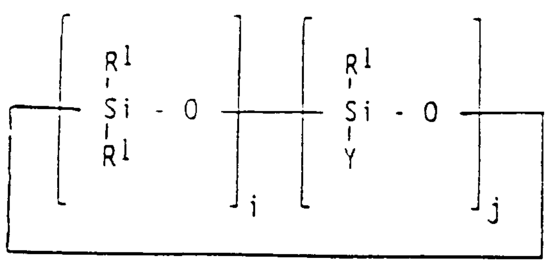

(8)

in der

- $R^1$ und Y die gleiche Bedeutung haben wie in Anspruch 1 festgelegt,
- i eine ganze Zahl ist, die zwischen 0 und 9 einschließlich liegt,
- j eine ganze Zahl ist, die zwischen 1 und 9 einschließlich liegt,
- i + j zwischen 3 und 10 einschließlich liegt.

**7.** Polydiorganosiloxan nach Anspruch 6, das folgender Formel entspricht:

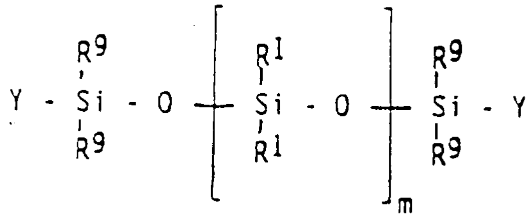

(10)

in der:

- Y und $R^1$ die für die Formel (1) des Anspruchs 1 angegebene Bedeutung haben,
- $R^9$, seien sie gleich oder verschieden, aus den Resten $R^6O$ und $R^6OR^7O$ ausgewählt sind,

wobei $R^6$ für einen Alkylrest mit $C_1$-$C_4$ und das Symbol $R^7$ für einen Alkylenrest mit $C_2$-$C_4$ steht.

**8.** Zusammensetzung aus Organopolysiloxanen, die bei der Lagerung in Abwesenheit von Feuchtigkeit,

Sauerstoff, und UV stabil ist und die zu einem Elastomeren vernetzen kann durch Einwirkung mindestens eines Vernetzungsmittels, ausgewählt aus Feuchtigkeit, Sauerstoff und UV-Bestrahlung, dadurch gekennzeichnet, daß sie beeinhaltet:

(A) - 100 Gewichtsteile mindestens eines der Polydiorganosiloxane, wie sie in Anspruch und 7 definiert sind,

(B) - 0 bis 250 Gewichtsteile eines mineralischen Füllmittels,

(C) - 0 bis 3 Gewichtsteile eines Härtungskatalysators.

**9.** Zusammensetzung nach Anspruch 8, dadurch gekennzeichnet, daß der Härtungskatalysator auf Eisen, Mangan oder Zinn basiert.

**10.** Zusammensetzung nach Anspruch 8 oder 9, dadurch gekennzeichnet, daß sie außerdem pro 100 Teilen des Polymeren (A) 0,05 bis 5 Teile eines Fotosensibilisators enthält.

**11.** Zusammensetzung nach Anspruch 10, dadurch gekennzeichnet, daß der Fotosensibilisator folgende Formel aufweist:

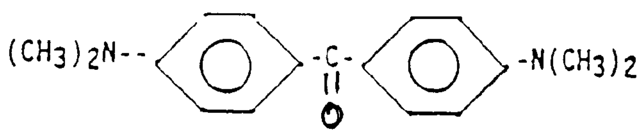

MICHLER-Keton

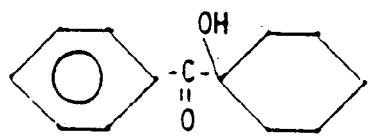

1-Hydroxy-cyclohexyl-phenylketon

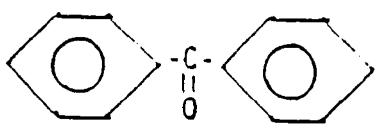

Benzophenon

## Claims

**1.** Silane of formula

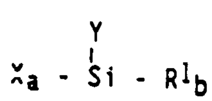

(1)

in which:

- $R^1$ is chosen from a monovalent hydrocarbon group optionally substituted by halogen atoms or cyano groups,
- X is a hydrolysable group and
- Y is a cyclopentenyl residue of formula

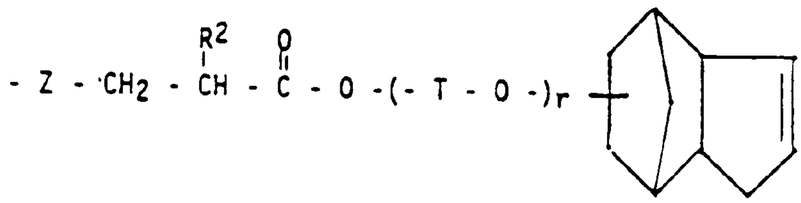

(2)

in which:

- Z is a linear or branched divalent saturated hydrocarbon radical containing from 1 to 6 carbon atoms which may be interrupted by at least one heteroatom chosen from S, N and O,
- T is a $C_2$-$C_{20}$ linear or branched divalent saturated hydrocarbon radical,
- $R^2$ is chosen from a hydrogen atom and the methyl radical,
- a is chosen from 0, 1, 2 and 3,
- b is chosen from 0, 1 and 2,
- a + b = 3,
- r is 0 or 1.

**2.** Silane according to Claim 1, characterized in that the radical X is chosen from a halogen atom and from N-substituted amino, N-substituted amido, N,N-disubstituted aminoxy, ketiminoxy, aldiminoxy, alkoxy, alkoxyalkyleneoxy, enoxy and acyloxy radicals.

**3.** Silane of formulae:

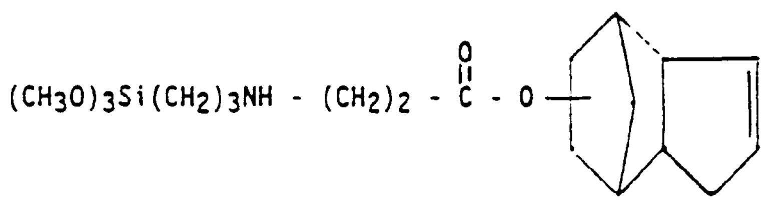

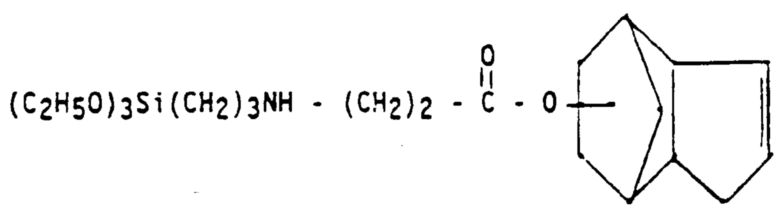

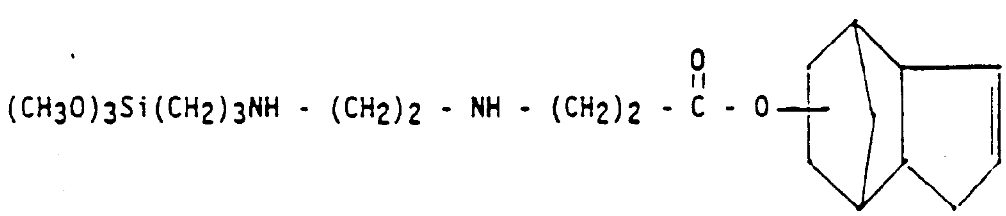

**4.** Polyorganosiloxane containing, per molecule, at least one unit corresponding to the general formula:

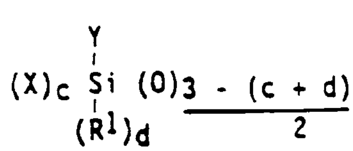

(5)

- $R^1$, X and Y have the same meaning as that given in formula (1) of Claim 1,
- c is 0, 1 or 2,
- d is 0, 1 or 2,
- c + d does not exceed 2.

5. Polyorganosiloxane according to Claim 4, characterized in that it additionally comprises

$$(R^1)_e\, Si\, (O)_{\frac{4-e}{2}} \quad (6)$$

in which:
- $R^1$ has the same meaning as in formula (1) of Claim 1,
- e is chosen from 0, 1, 2 and 3.

6. Block or random diorganopolysiloxane copolymers of formula:

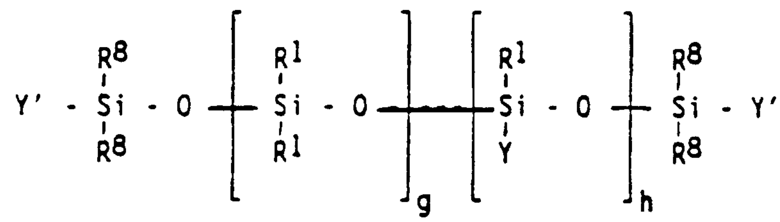

(7)

in which:
- $R^1$, X and Y have the meaning as defined in Claim 1,
- Y' is chosen from the radicals Y, $R^1$ and hydroxyl,
- $R^8$ is chosen from a radical $R^1$ and a radical X,
- g is an integer from 0 to 1,000,
- h is an integer from 0 to 50,
- if h = 0, the two radicals Y' is Y,

and those of formula:

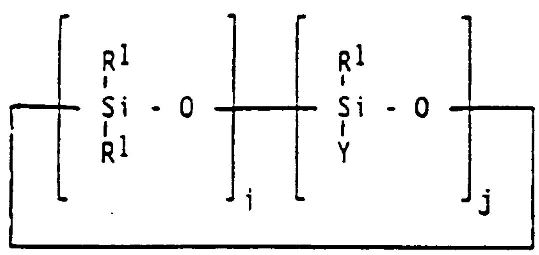

(8)

in which:
- $R^1$ and Y have the meaning as defined in Claim 1,
- i is an integer from 0 to 9 inclusive,
- j is an integer from 1 to 9 inclusive,
- i + j is from 3 to 10 inclusive.

7. Polydiorganosiloxane according to Claim 6, corresponding to the formula:

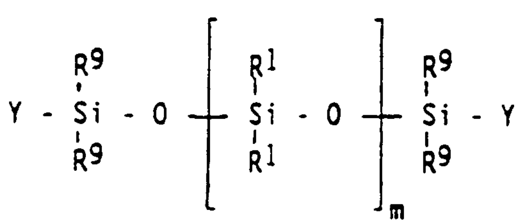

(10)

in which:
- Y and $R^1$ have the meaning given in formula (1), of Claim 1,

- $R^9$, which are identical or different, are chosen from the radicals $R^6O$ and $R^6OR^7O$, the symbol $R^6$ denoting a $C_1$-$C_4$ alkyl radical and the symbol $R^7$ denoting a $C_2$-$C_4$ alkylene radical.

**8.** Organopolysiloxane composition which is stable in storage in the absence of moisture, oxygen and UV and capable of crosslinking to an elastomer on exposure to at least one means of crosslinking chosen from moisture, oxygen and an UV radiation, characterized in that it comprises:
(A) - 100 parts by weight of at least one polydiorganosiloxane as defined in Claim 6 or 7,
(B) - 0 to 250 parts by weight of an inorganic filler,
(C) - 0 to 3 parts of a cure catalyst.

**9.** Composition according to Claim 8, characterized in that the cure catalyst is based on iron, manganese or tin.

**10.** Composition according to Claim 8 or 9, characterized in that it additionally comprises, per 100 parts of polymer (A), from 0.05 to 5 parts of a photosensitizer.

**11.** Composition according to Claim 10, characterized in that the photosensitizer has the formula:

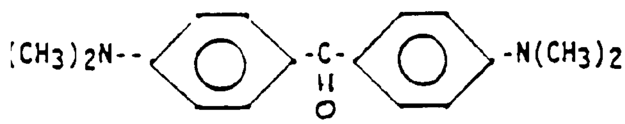 (Michler's ketone)

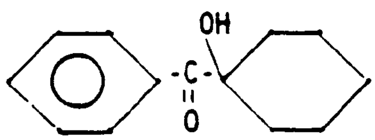 (1-hydroxycyclohexyl phenyl ketone)

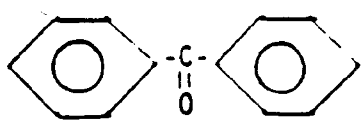 (benzophenone)